# EUROPEAN PATENT SPECIFICATION

(11) **EP 3 062 631 B1**
(45) Date of publication and mention of the grant of the patent: **13.06.2018**
(21) Application number: 14790092.2
(22) Date of filing: 28.10.2014
(51) Int. Cl.: A23G 9/08, A23G 9/12, A23G 9/22

(54) **MACHINE FOR PREPARING COOLED AERATED CONFECTIONERY WITH ACCURATE TEMPERATURE CONTROL**
MASCHINE ZUR HERSTELLUNG GEKÜHLTER BELÜFTETER SÜSSWARENMASSE MIT GENAUER TEMPERATURREGELUNG
MACHINE DE PRÉPARATION DE CONFISERIE AÉRÉE REFROIDIE AVEC UNE RÉGULATION PRÉCISE DE LA TEMPÉRATURE

(30) Priority: 30.10.2013 EP 13190810
(43) Date of publication of application: 07.09.2016
(73) Proprietor: Nestec S.A., 1800 Vevey (CH)
(72) Inventor: NOTH, André, CH-1009 Pully (CH); YOAKIM, Alfred, CH-1806 St-Legier-la Chiesaz (CH)
(74) Representative: Navarro Fernández, Maria Isabel
(86) International application number: PCT/EP2014/073130
(87) International publication number: WO 2015/063091

(56) References cited:
- EP-A1- 2 266 418
- EP-A2- 1 738 652
- WO-A1-2012/122594
- CN-U- 201 682 975
- JP-A- H11 113 498
- JP-A- 2000 093 090
- US-A- 5 363 746

## Description

### Field of the invention

The present invention is directed to a system for preparing an aerated and cooled confectionery such as ice cream or whipped yogurt, the system comprising a preparation machine and a dedicated container. In particular, the invention relates to a preparation system providing an accurate temperature control of the product during the preparation process.

### Background of the invention

Currently, the majority of ice cream consumption at home concerns products bought frozen at the point of sales. As for dairy products, there are several drawbacks such as the need to transport the products at home rapidly in order to keep them at the cold (frozen) state, the need to store them in a freezer and the limited number of flavors available considering standard freezer volume. Additionally, the texture of such product is rather hard and far from the freshly made ice cream.

An alternative solution available today is the use of an ice cream machine to produce fresh ice cream. Thereby, although the obtained texture of the resulting product is more satisfactory, the preparation procedure by means of the known ice-cream machines has several drawbacks.

In particular, all the ingredients must be mixed previously, the volume of such machines corresponds usually to five or more serving portions of the same flavor and the time necessary is about a half an hour. Moreover, the ingredients necessary for the preparation come in contact with a large number of parts of the preparation machine (e.g. a stirrer, tanks, or a dispenser), which all have to be cleaned. Other alternatives imply a preparation at ambient temperature before the freezing phase in a standard freezer. Hence, they are also time consuming and require cleaning tasks.

Therefore, there is a demand for increasing the convenience of the preparation of cool confectionery or desserts, in particular, reducing the preparation time, avoiding the hassle of cleaning the surfaces in contact with food and delivering on demand an appealing texture and diversity of products.

US 2006/0263490 for example relates to a frozen confectionery maker comprising a cup holder for removably receiving a cup with a cavity in its wall and base for receiving freezable solution. The cup of the confectionery maker is designed to serve for the preparation and serving of the cup.
WO 2010/149509 for example relates to a system for preparing a frozen confectionery, the system comprising a cylindrical container for being inserted into a dedicated preparation device, said container comprising a predefined amount of ingredients. The device of the system comprises a container holder having an inner heat exchange surface designed for being in tight contact with the container when being placed in the container holder and a delivery outlet for serving the single portion prepared within the container to a dedicated receiving receptacle.

During the preparation process in the known devices, a heat transfer is generally obtained between the container body holding the ingredients and the inner heat exchange surface of the device by means of conduction through the outer body of the container.

A problem is to obtain an accurate information of the product temperature of the product during the preparation, in particular, during stirring so that it is made possible to adjust the preparation parameters (cooling powder, rotation velocity, rotation direction, timing, etc.) accordingly to obtain the optimal final texture of the cooled product.

However, accurate temperature information would require placing a temperature probe into the container during the preparation process, which in turn would lead to a complex construction of machine and the hassle of cleaning the temperature probe.

An alternative, would consist in using a contactless temperature sensor such as an infrared temperature sensor. The sensor may be arranged in the machine to measure the temperature at the upper surface of the product. This solution is however a relatively costly approach. More importantly, sensing the constantly moving surface and projections of the aerated product may lead to large deviations of the sensed temperatures compared to the actual temperature of the product.

It is known from the state of the art document WO 2012/122594 A1 for example which describes an ice-cream maker comprising a sensor module preferably monitoring the temperature of the ice-cream mixture for detecting the hardness measure or consistency of the ice-cream mixture. Document JP H11113498 A describes an apparatus for producing ice-cream comprising a temperature sensor for detecting the temperature of the material in the material container into which the ice-cream material is charged. Document CN 201682975 U relates to a machine with automatic temperature control function for making ice-cream and milk shake: this machine measures the temperature of ice-cream or milk shake through attaching a temperature sensor on the outer wall of the forming cylinder body.

The present invention thus aims at providing dedicated means for obtaining reliable information regarding the temperature of a product held within such container when being accommodated in a machine for preparation of an aerated and cooled confectionary product.

### Object and summary of the invention

The present invention seeks to address the above-described problems. The invention also aims at other objects and particularly the solution of other problems as will appear in the rest of the present description. The present invention relates to a a system according to claim 1, comprising a machine and a container, the machine for the preparation of cooled confectionery comprising a receiving seat for accommodating an essentially cup-shaped container, a heat exchange element having a heat exchange contact surface arranged to be in contact with an outer wall surface of the container when the container is placed in the receiving seat, and at least one temperature sensor arranged to measure the temperature at the outer wall surface of the container when the container is placed in the machine,
wherein the temperature sensor is arranged to be at distance from the heat exchange contact surface. According to the invention, a machine with a temperature sensing means is provided, which enables the reliable detection of a temperature of the product within a container without the need of directly contacting the product within the container e.g. by means of a dedicated temperature probe. Thereby, as the temperature sensor is arranged to measure the temperature at an outer surface of the container, a hygienic temperature sensing operation is enabled and no cleaning of the temperature sensing means is necessary. Moreover, as the temperature sensor is arranged distanced respectively remote from the heat exchange contact surface of the heat exchange element of the machine, a deviation of the detected temperature from an actual product temperature of the product is prevented.

The machine according to the invention is preferably designed for preparing a cooled confectionery by means of a single-use container holding a predefined amount of ingredients. Thereby, the receiving seat of the machine constitutes receiving means designed to support the container within the machine. The receiving seat is preferably adapted for receiving containers of different volumes.

The heat exchange element of the machine is preferably integrally formed with the receiving seat for the container. The heat exchange element is preferably a metallic evaporator connected to a cooling circuit of the machine. Thereby, the heat exchange element is preferably an essentially annular element designed to engage in contact against an outer wall of a dedicated container.

The machine may also comprise a defrost system for facilitating the removal of the container from the machine.

The machine may further comprise a stirring unit designed for selectively contacting and rotating stirring means within the container. The stirring means may be provided as part of the machine or alternatively may be provided within the container itself.

The machine preferably comprises a control unit respectively a control circuitry and is designed to control at least the operation of the heat exchange element.

In a preferred embodiment, the temperature sensor and the heat exchange element are functionally connected via a control circuitry to the control unit of the machine. Accordingly, the control unit is designed to control the operation of the heat exchange element in response to the temperature information provided by the temperature sensor.

The temperature sensor is preferably a thermocouple, thermistor or resistance temperature detector. The temperature sensor may however be any other kind of sensor suitable for measuring the temperature at an outer surface of the container when being connected to the machine.

The temperature sensor is preferably arranged within the machine such that it is in direct contact with the outer surface of the container when the container is placed in the machine.

The temperature sensor is preferably arranged at a thermally insulating portion of the receiving seat. The thermally insulating portion of the receiving seat is preferably made from a different material than the heat exchange portion such as polymer (e.g., polypropylene or polyethylene).

The thermally insulating portion and the heat exchange portion of the machine are preferably arranged such as to constitute the receiving seat of the machine for accommodating the container. Thereby, the thermally insulating portion and the heat exchange portion preferably comprise an inner support surface which is complementary shaped to the general shape of the body, in particular, side wall of the container.

The thermally insulating portion preferably has a reduced heat-conductivity with respect to the heat exchange portion. In a preferred embodiment, the thermally insulating portion is made from a material having a heat-conductivity equal to or below 2 W/mK, preferably equal to or below 1 W/mK. The thermally insulating portion may be made from e.g. polymer or plastic material.

Preferably, the temperature sensor is arranged to exert a pressure when the container is in place in the receiving seat. In a preferred embodiment, the temperature sensor is arranged to protrude from an inner surface of the seat of the machine in direction of the space allocated for the container. Thereby, the sensor may be fixedly arranged at the seat respectively at a thermally insulating portion of the seat. Accordingly, the temperature sensor is designed for exerting an inwardly directed force onto an outer surface of the container which is preferably complementary formed to the inner surface of the seat.

The temperature sensor may as well be spring-biased against the outer surface of the container when the container is placed in the receiving seat. Thereby, the biasing means such as e.g. a spring or flexible element made, from e.g. rubber, may be arranged within a recess of the seat respectively within a recess within the thermally insulating portion of the seat.

The temperature sensor could also be mounted on a mobile holding part on the seat in such a manner that it takes a retracted position in which the sensor is placed away from the surface of the container and a sensing position in which the sensor is in contact with the surface of the container. The temperature sensor can also be arranged to become in contact with the bottom of the container. The mobile holding part can be associated the opening/closing mechanism of the machine so that it can be positioned in sensing position during the closing of the machine. As such, the sensor remains hidden and creates no protrusion in the seat when the machine is open, allowing for easier cleaning.

The container of the system according to the invention is preferably a single-use container designed for being inserted into the machine for preparing a frozen confectionery. The container is adapted for preparing a cooled confectionery from ingredients, which are preferably, shelf stable at ambient temperature and preferably enclosed within a compartment of the container, upon cooling of the ingredients by means of the heat exchange element of the machine.

In a preferred embodiment, the container comprises an at least partly rigid body for holding a predefined amount of comestible ingredients. The body of the container is preferably a single wall member forming a cavity for the ingredients. The body of the container is preferably made from metal and/or plastic material. The body may as well at least be partially made from biodegradable material. According to the invention, the wall of the container is heat-conductive at least in an area overlapping with the heat exchange surface and an area where the temperature sensor is in contact with the container wall when the container is placed in the machine. Outside these areas, the container may be formed of heat-insulating material such as polymer (e.g., polypropylene or polyethylene).

The container preferably comprises a dedicated heat exchange portion, which is arranged such as to overlap with the heat exchange surface of the heat exchange element of the machine when the container is placed in the seat thereof.

The heat exchange portion of the container is preferably integrally formed with the body of the container. Preferably, the heat exchange portion comprises an annular portion arranged at the circumference of the container. The heat exchange portion is preferably at least partially made from metal, e.g. from aluminium or steel. The heat exchange portion may be an annular portion of constant height. The heat exchange portion may comprise a thickness which is equal to the rest of the container body or may be made of a reduced thickness compared to the rest of the container body.

The container may further comprise a lid member for closing-off an opening within the container body.

The provided single-use container provides an initial packaging for a predefined amount of ingredients. Further, the container is also designed for being used as process container, i.e. as container in which the frozen confectionery is prepared, as well as serving container, i.e. as container from which the consumer may directly consume the resulting cooled, e.g., frozen or chilled confectionery. Accordingly, there is no need for transferring the cooled confectionery product in an additional receptacle or vessel for consumption.

The term "single-use container" when used in the present invention encompasses any container suitable for being disposed after being used for the preparation of the single-portion of frozen confectionery. Thereby, the containers are preferably at least partially recyclable.

The term "cooled confectionery" within this application is intended to refer to different types of frozen or chilled confectionary. Non limiting examples are ice cream, sorbet, sherbet, water ice, granitas, frozen yogurt, frozen dairy, soft ice, Mellorine, frozen custard, non-dairy frozen confection, milk ice, ice lolly, gelato or frozen jelly, or chilled desserts such as mousses, whipped yogurt, coffee latte, smoothie or milk shakes.

In a preferred embodiment, the wall of the container comprises a thickness such as to provide a low thermal inertia. It is preferable that the thickness of the body is small enough to ensure an effective heat transfer and, consequently, a cooling of the product in a short time, preferably, in less than 5 minutes. In particular, the thickness of the body is between 0.03 and 5 mm, preferably, between 0.05 and 2 mm. For example, the thickness of the body is of 0.12 mm.

The container comprises an additional heat-conducting portion that is arranged separate from the area of the container which overlaps with the heat-exchanging surface of the machine when the container is placed into the receiving seat.

The additional heat-conducting portion is arranged such as to overlap with, respectively contact, the temperature sensor of the machine when the container is accommodated in the seat of the machine.

The additional heat-conducting portion may be an annular portion of constant vertical projected height (h). The additional heat-conducting portion may be made of the same material as the primary heat-conducting portion (i.e., overlapping with the heat exchange surface) but from a different material than the non-conductive portions of the container body which are not made of heat-conductive material such as e.g. aluminium and/or steel. Therefore, for example, two separate heat-conducting portion, such as of annular shape can be contemplated separated by a nonconducting portion (e.g., made of plastic). In another possible option, the two heat conducting portions are merged into a single heat conducting portion both overlapping with the heat exchange surface and the at least one temperature sensor means.

The additional heat-conducting portion may comprise a reduced thickness compared to the rest of the container body. Thereby, the heat-conducting portion may comprise a thickness preferably between 0.03 and 5 mm, most preferably, between 0.05 and 2 mm.

In a preferred embodiment, the body of the container has an inverted conical or curved shape. The container is preferably rotational symmetric about a central axis of the body of the container.

The lid member of the container may be any means for closing the cavity of the body in which the ingredients are provided. Preferably, the lid member may be a membrane sealed to a top or rim portion of the body of the container. Before usage of the container, the user may remove the lid member by tearing it off the body. Alternatively, the lid member may as well be a re-connectable member having dedicated means for being reconnected to the body of the container after removal therefrom.

The lid member is preferably of metal such as aluminium and/or of plastic material. In another preferred embodiment, the lid member is of biodegradable material. The ingredients enclosed by the container preferably comprise an ambient shelf-stable confectionery product and optionally also a gas. The ingredients may be present in dry and/or liquid form.

In a preferred embodiment, the ingredients provide a single portion suitable for preparing a frozen confectionary comprising 50 ml to 500 ml. Thereby, the body of the container is preferably adapted to enclose a specific volume in which a predefined amount of ingredients is provided.

In a preferred embodiment, a kit of containers may be provided which comprises a plurality of different containers differing at least in the volume enclosed by the body of the container. Thereby, all of the containers comprise a wall that is heat-conductive at least in an area overlapping with the heat exchange surface of the machine and an area where the temperature sensor is in contact with the container wall when the container is placed in the machine.

The different containers each comprise a heat exchange portion for contacting the heat exchange surface of the machine and an additional heat-conducting portion for contacting the temperature sensor, wherein the respective portions are arranged at a predefined position at each of the containers.

The heat exchange portion and the additional heat-conducting portion in particular their outer form and diameter (s) as well as their arrangement at the container body with respect to each other are preferably substantially equal for all of the different containers having different volumes enclosed therein.

Depending on the resulting confectionery product to be prepared within the specific container, the container may comprise a dedicated volume such as for example 150 ml for light aerated desserts, 200 ml for an ice-cream product or 300 ml for a milkshake.

### Brief description of the drawings

Further features, advantages and objects of the present invention will become apparent for a skilled person when reading the following detailed description of embodiments of the present invention, when taken in conjunction with the figures of the enclosed drawings.
- Fig. 1: shows a schematic drawing of the system for preparing a cooled confectionery according to the invention.
- Fig. 2a and 2b: show different shapes of a container body of the container of the system according to the present invention.
- Fig. 3a and 3b: show schematic drawings of preferred embodiments of the temperature sensor according to the invention.

### Detailed description of the figures

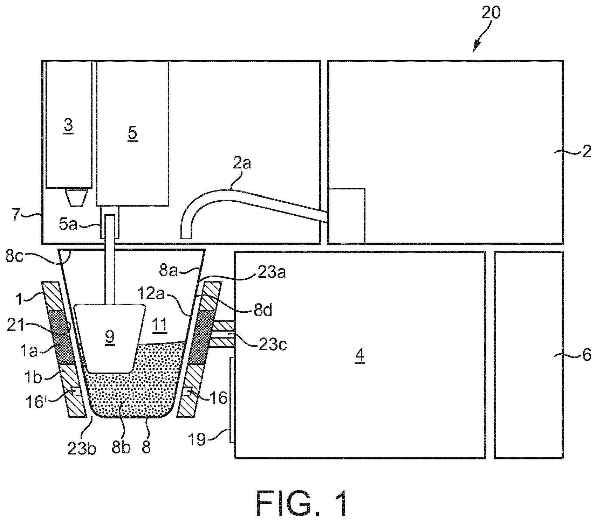

Figure 1 relates to a preferred embodiment of a system according to the present invention comprising a single-use container 8 and a food preparation machine 20 designed for preparing a frozen confectionery by means of the container 8.

The machine 20 comprises a receiving seat 1 for receiving the container 8 therein. The receiving seat 1 is preferably shaped in V-form or truncated conical form when seen in sectional side view as indicated in figure 1. Thereby, the receiving seat 1 preferably comprises an insertion opening 23a in which the container 8 may be placed, as well as a lower opening 23b enabling the accommodation of containers of various sizes.
Further, the receiving seat 1 is preferably formed as an annular ring portion. The receiving seat 1 is preferably connected to a housing of the machine by dedicated support means 23c.

According to such an embodiment, containers 8 of different sizes respectively volumes may be supported by the receiving seat 1.

The machine further comprises a cooling unit 4 connected to a heat exchange element or cooling element 1a that is preferably connected to or integrally formed with the receiving seat 1 of the machine 20. The heat exchange element 1a is preferably an evaporator fluidically connected to the cooling unit 4 of the machine. The heat exchange element 1a thus serves as a heat exchanger that withdraws the heat energy from the container 8 and its enclosed confectionery product to lower rapidly the temperature of the product contained in the container.

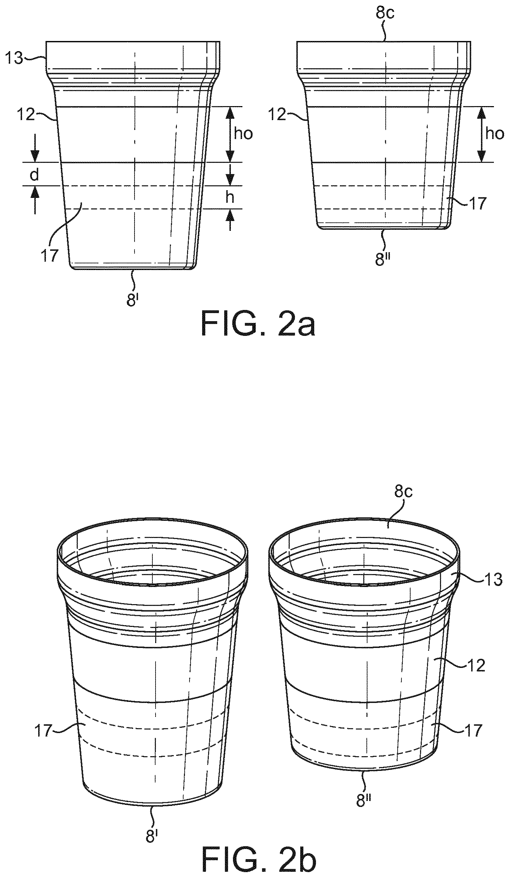

The heat exchange element 1a is shaped to overlap with and be arranged adjacent to an outer wall surface 8d and a heat exchange wall portion 12 of the container 8 (see figure 2a,2b) when the container is placed in the receiving seat 1 of the machine.

The heat exchange element 1a comprises a heat exchange contact surface 21 that is arranged to be in contact with the outer wall surface 8d of the container when the container 8 is placed in the machine. Thereby, the heat exchange contact surface 21 is arranged at an inner surface of the receiving seat 1. The heat exchange contact surface 21 of the heat exchange element 1a and the heat exchange wall portion 12 of the container 8 are preferably complementary shaped.

The heat exchange element 1a is preferably of a material that provides excellent heat transfer properties, preferably metal such as stainless steel, copper or aluminium. Accordingly, the heat transfer between the container 8 and the heat exchange element 1a is significantly enhanced.

As shown in figure 1, the container receiving seat 1 is preferably only partially composed of the heat exchange element 1a. The receiving seat 1 preferably further comprises a thermally insulating portion 1b made from material with a lower thermal heat capacity such as e.g. a polymer or plastic material. According to such an embodiment, the thermal inertia and thus energy losses are reduced, which allows a faster cooling of the container 8. The thermally insulating portion 1b further serves to insulate the sensing means from the external environment, in a tight manner against the wall of the container, so that a more accurate product temperature is obtained.

The machine 20 further comprises temperature sensing means such as a temperature sensor 16. The temperature sensor may comprise for example a thermocouple, thermistor or resistance temperature detector. The temperature sensor 16 is arranged distanced from the heat exchange element 1a and thus distanced from the heat exchange contact surface 21 of the machine. Accordingly, negative influences of the heat exchange contact surface 21 to the measured temperature are effectively prevented.

The temperature sensor 16 is preferably arranged at the thermally insulating portion 1b of the seat respectively receiving seat 1 of the machine.

The thermally insulating portion 1b may be arranged below and/or above the heat exchange element 1a of the receiving seat 1. As shown in figure 1, the thermally insulating portion 1b is preferably integrally formed with the receiving seat 1 such that a continuous inner annular surface is provided for contacting an outer wall surface 8d of the container 8.

The temperature sensing means may as well comprise a plurality of temperature sensors 16, 16' (see figure 1) which are preferably arranged at different positions on the receiving seat 1. Thereby, a first temperature sensor 16 may be arranged at a position directed towards the machine side of the system, whereby a second temperature sensor 16' may be arranged at the user side of the machine. Thereby, the plurality of temperature sensors 16, 16' are preferably arranged at the thermally insulating portion 1b of the receiving seat 1, distanced from the heat exchange contact surface 21.

The machine 20 may further comprise insulating means for shielding the temperature sensor 16 from external influences. The machine 20 may for example comprise shielding means 19 arranged between the thermally insulating portion 1b and further components of the machine such as e.g. the cooling unit 4.

The machine 20 preferably comprises a control unit 6 for controlling the operations of the components of the machine. The control unit 6 is preferably connected at least to the cooling unit 4 and the temperature sensing means 16.

In a preferred embodiment, the temperature sensor 16 is connected to the control unit 6 in order to control the cooling unit 4 of the machine 20 dependent on the actual temperature of a product 8b within the container 8.

The cooling unit 4 of the machine 20 is adapted to cool the heat exchange element 1a. Since the heat exchange element 1a comprises excellent heat conductivity, the container 8 and in particular the heat exchange wall portion 12 of the container 8 when being in contact with the heat exchange element 1a is effectively cooled. The cooling unit 4 can comprise any refrigeration and/or circulatory heat transfer system to cool the heat exchange element 1a, the heat exchange wall portion 12 and consequently the container 8 as rapidly as possible.

Optionally, the machine 20 further comprises a liquid tank 2 for holding liquid such as e.g. water and a dedicated pump. The liquid tank 2 may be connected to liquid dispensing means 2a for providing liquid to the container 8 when being placed within the receiving seat 1 of the machine 20. The liquid tank 2 may be necessary when the initial product is powder, gel or liquid concentrate and so requires dilution according to a predetermined dilution ratio for achieving the final product with the correct texture.

Furthermore, the machine 20 may comprise one or more topping reservoirs 3 and an associated valve or pump (not shown) for providing toppings in solid or liquid form to the product 8b. The toppings may be liquid coulis, liquid chocolate, honey, caramel or solid products like crisps, flakes, chocolate bits. Additionally, the toppings may be liquefied by means of an additionally provided heating source such as e.g. melted chocolate.

The machine 20 further comprises a stirring unit 5 adapted to connect to a stirring member 9 and driving it in a combined movement (as will described in detail later on). For this reason, the stirring unit 5 is preferably equipped with connection means 5a designed for selectively connecting to the stirring member 9. The stirring member 9 may either be part of the machine 20 or be provided as part of the container 8 (integral or part to it). The stirring member is preferably a spoon.

The topping reservoirs 3 and the stirring unit 5 are preferably mounted on a mobile structure 7 of the machine in order to allow the insertion and removal of the container 8 into and from the container receiving seat 1. The mobile structure 7 is thus adapted to be moved relatively to the rest of a housing of the machine 20 from a closing position (shown in figure 1) to an open position (not shown). Thereby, the movement of the mobile structure 7 with respect to the rest of the machine 20 may be rotation or translation.

In the following, the basic working principle of the machine for preparation of frozen confectionary will be explained.

First, the mobile structure 7 of the machine 20 is brought into its open position in which a container 8 from which a lid member provided to close a central opening 8c of the container 8 has been removed is inserted in the receiving seat 1. In the open position, the stirring member9 may be manually connected to the stirring unit 5 of the machine.

The mobile structure 7 is then brought into its closed position in which the stirring unit 5 and the topping reservoirs 3 are lowered towards the container 8. In this position, the stirring member 9 is brought into a position adjacent to an inner surface 12a of the container 8.

The product within the container 8 will then be cooled by means of the heat exchange element 1a interacting with the outer wall surface 8d of the container and preferably with the heat exchange wall portion 12 thereof. At the same time, the stirring unit 5 may provide a motion of the stirring member 9 within the container 8.

The operation of the heat exchange element 1a is preferably set in response to a temperature detected at the outer wall surface 8d of the container 8 by means of the temperature sensor 16. Thereby, the general operation such as an on/off state of the heat exchange element 1a as well as the particular cooling temperature may be set in response to the temperature measured at the outer wall surface 8d of the container 8.

During the preparation process, liquid or solid toppings may be added from the topping reservoirs 3 to the main product within the container 8. This preferably takes place close to the end of the preparation process such that liquid toppings will create an appealing visual swirl for the consumer and solid toppings will remain crispy.

When a predefined cooling temperature is reached and sensed by the temperature sensor 16, the cooling operation is preferably stopped or reduced to hold the product at the optimal serving temperature.

The mobile structure 7 of the machine 20 is then brought into its open position such that the container 8 may be removed from the receiving seat 1. The stirring unit 5 may be adapted to disconnect from the stirring member 9 when bringing the mobile structure 7 in an open state. The stirring member 9 is therefore left in the final product and thus within the container 8. The stirring member 9 that is preferably shaped like a spoon may then be used for consumption of the prepared confectionery 8b. The container thus serves at the same time as initial container, process container and final container during the preparation of the frozen confection. Accordingly, no cleaning operations of the components of the machine are necessary.

With the described configuration, effective measurement of the temperature of the product held within the container 8 is enabled. Thereby, a hygienic solution is provided which does not require the provision of a temperature probe into the product within the container. Further, due to the measurement of the temperature at the outer wall surface 8d of the container, splashes occurring during the preparation process may be effectively prevented from contacting the temperature sensor 16.

As shown in figures 2a and 2b, different containers 8',8'' may be provided each of which enclose a different volume such as 300 ml, 200 ml or 150 ml. Dependent on the product to be prepared by the respective container 8, the size and volume of the container 8 is adapted to contain a predefined amount of ingredients necessary for preparing the specific product. The containers preferably comprise a shelf-stable comestible ingredient. In addition, the container may further comprise a gaseous phase such as e.g. air which is enclosed in a compartment 11 by means a lid member (not shown). In a preferred embodiment the amount of confectionery ingredients preferably ranges from 20 to 60% of the provided volume of the container. The rest of the container may be filled with gas.

Alternatively or additionally, nitrogen can be provided within the container for aseptic filling and extended shelf life.

As already mentioned, a lid member (not shown) is preferably provided to each of the containers in order to close off aperture 8c of the container and thus, to enclose the ingredients therein.

As shown in figure 2a and 2b, the different containers 8',8'' preferably all comprise common technical parts, such as for example a heat exchange portion 12 of vertical projected height h0. The containers further comprise an additional heat conducting portion 17. Thereby, the heat exchange wall portion 12 and/or the additional heat conducting portion 17 are preferably of essentially identical outer diameter for all of the different containers 8',8". More preferably, the heat exchange wall portion 12 and/or the additional heat conducting portion 17 are of the same dimensions and shape for all of the different containers 8',8".

The additional heat-conducting portion 17 is preferably an annular portion of predefined vertical projected height h, which preferably lies between 5 and 5 mm. The additional heat-conducting portion 17 is preferably arranged axiallydistanced by a distance d from the heat exchange wall portion 12 of the container 8. The distance d preferably lies between 2 and 35 mm, more preferably between 5 and 25 mm. According to the invention, the heat exchange wall portion 12 overlaps with the heat exchange contact surface 21 and the additional heat-conducting portion 17 is positioned where the temperature sensor 16 is in contact with the outer wall surface 8d of the container when the container 8 is placed in the receiving seat 1.

In an alternative mode, the heat exchange wall portion 12 and the additional heat-conducting portion 17 are formed into a single annular portion, thereby overlapping with the heat echange element 1a and temperature sensor 16 when the container is in place in the seat of the machine. Such overlapping portion can so be a single band of vertical projected height h0+h (with no distance d).
The additional heat-conducting portion 17 may comprise a thickness t which is different from the rest of the container wall thickness. In particular, the additional heat-conducting portion 17 may comprise a reduced thickness of 10 to 30, preferably by 15 to 25% lower than the rest of the outer wall surface 8d of the container.

The additional heat-conducting portion 17 may be of different material compared to the rest of the outer wall surface 8d of the container and/or the heat exchange wall portion 12. The additional heat-conducting portion 17 may as well be made from the same material as the heat exchange wall portion 12 of the container.

Thereby, the additional heat-conducting portion 17 may at least be partially made from metal such as copper, aluminium and/or steal.

The additional heat-conducting portion 17 may as well comprise an integrally formed or externally applied layer of material with increased heat conductivity such as metal material in order to increase the heat conductivity through the outer wall surface 8d of the container 8.

The containers 8',8'' preferably also comprise an upper rim portion 13 which is of essentially identical geometric shape. The upper rim portion 13 may be a portion of increased diameter of the container body 8a as indicated in figures 2a and 2b. Alternatively or in addition, the upper rim portion 13 may as well comprise a flange-like rim portion or a curled outer rim portion (not shown).

The thickness of the container body 8a of the different containers 8',8'' in particular the thickness of the heat exchange wall portion 12 is preferably identical, but may as well be different in order to obtain different thermal properties and thus cooling properties for the respective product to be prepared.

Each of the containers 8',8" has preferably an essentially conical shape. Alternatively, the container may as well have an essentially curved shape. Acccording to such a shape of the container 8, an extension and/or retraction of the container body 8a due to variation of temperature will not negatively affect the proper support of the container 8 within the receiving seat 1 of the machine 20. In particular, a tight support between the container 8 and the receiving seat 1 and thus a close contact betweeen the heat exchange wall portion 12 and the heat exchange element 1a is ensured.

The machine 20 may further comprises torque sensing means (not shown) connected to the control unit 6. Thereby, the control unit 6 which is adapted to control the stirring unit 5 and in particular the rotational speed and the electrical current of a dedicated motor thereof, may sense the torque which is proportional to the electrical current. Accordingly, the viscosity of the product to be prepared within the container 8 can be detected by the control unit 6 in order to monitor the preparation process and detect whether the product within the container is ready for consumption.

The control unit 6 may further be designed to control the stirring unit 5 in response to a temperature measured by the temperature sensor 6. The control of the stirring unit may be its velocity and/or its rotational direction.

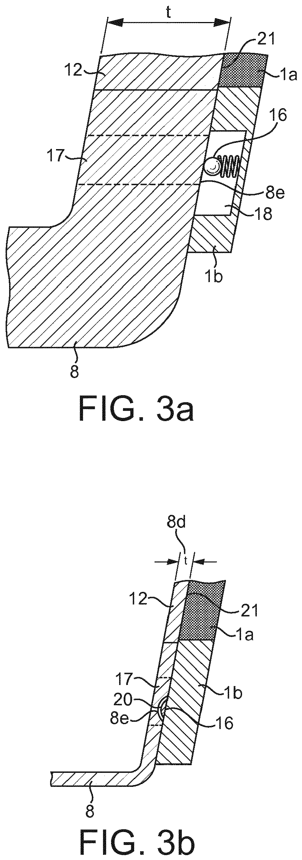

Figure 3a shows a preferred embodiment of the temperature sensor 16 being arranged at the receiving seat 1 of the machine 20. As shown in figure 3a, the temperature sensor 16 is arranged at the thermally insulating portion 1b of the receiving seat1. The thermally insulating portion 1b is preferably arranged such as to axially extend from the heat exchange element 1a, thereby forming an inner continuous surface of the receiving means 1 in order to contact an outer wall of the container 8 when being provided in the receiving means 1.

The thermally insulating portion 1b comprises a recess 18 in which the temperature sensor 16 is arranged. Thereby, the sensor 16 may be urged against an outer surface 8e of the container 8 provided to the receiving seat 1 by means of a dedicated force applying member 16a such as e.g. a spring arranged within the recess 18. The force applying member 16a may be constituted by any member suitable for exerting a force directed radially inwards towards the interior of the receiving seat 1 in order to bias the temperature sensor 16 against the outer wall surface 8d of the container. Due to the sensor 16 being pressed against the outer wall surface 8d, a close contact is established between the sensor 16 and the container wall such that a very accurate measurement is enabled.

As indicated in figure 3a by means of dotted lines, the temperature sensor 16 is arranged at the receiving seat 1 such as to contact the additional heat-conducting portion 17 of the container 8 as previously described.

The temperature sensor 16 is preferably arranged at a distance of at least between 2 and 40 mm, more preferably at least between 5 and 30 mm from the heat exchange contact surface 21.

Figure 3b relates to another preferred embodiment of the machine 20, wherein the temperature sensor 16 is arranged fixedly at an inner surface of the thermally insulating portion 1b of the receiving seat 1.

The sensor 16 may protrude to a predefined extent from the interior support surface of the receiving seat 1 such as to ensure a contact with the outer wall surface 8d of the container 8 when being accommodated by the receiving seat 1 of the machine 20. The sensor 16 preferably protrudes by 1 to 3 mm from the inner surface of the receiving seat 1.

According to such fixed arrangement of the sensor 16 at the interior support surface of the receiving seat 1 a close contact with the container wall is ensured. Thereby, a bulge as indicated by reference numeral 20 in figure 3b may be formed in the outer surface 8e of the container 8 due to the external force applied by the protruding sensor 16 onto the outer wall surface 8d.

The present invention enables the preparation of a frozen confectionery, which can be freshly prepared in single portions within the initial container that serves at the same time as process and enjoy container. Thereby, an accurate measurement of the temperature of a product held within the container is enabled and thus, an enhanced control of the preparation process in response to the product temperature is attainable.

In order to further enhance the accuracy of the temperature sensing, different temperature sensors may be provided at different locations with respect to the outer wall of the container when being placed in the receiving means of the machine 20. In particular, two temperature sensors may be arranged on opposite portions of the receiving seat 1. Further, the different temperature sensors may be arranged at different distances with respect to the heat exchange contact surface 21.

In addition, the control unit 6 may be designed for calculating respectively correcting an error in the measurement due to the temperature sensing being obtained through the wall of the container 8. Thereby, a correction formula or a lock-up reference table data may be used by the control means in order to further enhance the accuracy of the measured temperature value.

Although the present invention has been described with reference to preferred embodiments thereof, many modifications and alternations may be made by a person having ordinary skill in the art without departing from the scope of this invention which is defined by the appended claims.

## Claims

1. A system comprising a machine (20) and a container (8), the machine (20) comprising a receiving seat (1) for accommodating a container (8), a heat exchange element (1a) having a heat exchange contact surface (21) arranged to be in contact with an outer wall surface (8d) of the container when the container is placed in the receiving seat (1), and at least one temperature sensor (16) arranged to measure the temperature at the outer wall surface (8e) of the container when the container is placed in the machine, the temperature sensor (16) being arranged distanced from the heat exchange element (1a) and thus distanced from the heat exchange contact surface (21) of the machine,
the machine (20) being designed for preparing cooled confectionery by means of the container (8), the container (8) comprising a heat exchange wall portion (12) overlapping with the heat exchange element (1a) when the container (8) is in place in the receiving seat (1) of the machine, the heat exchange element (1a) operating in response to the temperature at the outer wall surface (8e) of the container measured by means of the at least one temperature sensor (16),
wherein the container (8) comprises an additional heat conducting portion (17) positioned where the temperature sensor (16) is in contact with the outer wall surface (8d) of the container when the container (8) is placed in the receiving seat (1).

2. The system of claim 1, wherein the additional heat-conducting portion (17) is arranged axially distanced from the heat-exchange wall portion (12) of the container when the container (8) is placed in the receiving seat (1).

3. The system of claim 1, wherein the additional heat-conducting portion (17) and the heat-exchange wall portion (12) are formed into a single annular portion overlapping with the heat exchange element (1a) and the temperature sensor (16) when the container (8) is placed in the receiving seat (1).

4. The system according to any of the previous claims, wherein the additional heat-conducting portion (17) comprises a thickness which is different from the rest of the container wall thickness, preferably a reduced thickness of 10 to 30%, more preferably a reduced thickness of 15 to 25%, than that of the container wall thickness.

5. The system according to any of the previous claims, wherein the additional heat-conducting portion (17) is made of a different material compared to that of the rest of the container (8) and/or to that of the heat-exchange wall portion (12).

6. The system according to any of the previous claims wherein the temperature sensor (16) is arranged to be in direct contact with the outer surface (8e) of the container when the container is placed in the machine.

7. The system according to any of the previous claims wherein the temperature sensor (16) is arranged to exert a pressure on the outer wall surface (8d) of the container when the container is in place in the receiving seat (1) of the machine.

8. The system according to any of the previous claims wherein the temperature sensor (16) comprises a force applying member (16a) suitable for exerting a force directed radially inwards towards the interior of the receiving seat (1).

9. The system according to any of the previous claims wherein the temperature sensor (16) is spring-biased against the outer wall surface (8d) of the container (8) when the container is placed in the receiving seat (1).

10. The system according to any of the previous claims wherein the temperature sensor (16) is arranged to protrude from an inner surface of the receiving seat (1) in direction of the space allocated for the container (8).

11. The system according to claim 10 wherein the temperature sensor (16) protrudes by 1 to 3 mm from the inner surface of the receiving seat (1).

12. The system according to any of the previous claims wherein the temperature sensor (16) is arranged at a distance of at least between 2 to 40 mm, preferably of at least between 5 and 30 mm, from the heat exchange contact surface (21).

13. The system according to any of the previous claims wherein the temperature sensor (16) is arranged at a thermally insulating portion (1b) of the receiving seat (1).

14. The system according to claim 13 wherein the thermally insulating portion (1b) is made of a material having a heat-conductivity equal to or below 2 W/mK, preferably equal to or below 1 W/mK, preferably made of a polymer material.

15. The system according to any of the previous claims, wherein the machine (20) comprises a plurality of temperature sensors (16, 16') arranged at different locations with respect to the outer wall of the container (8) when the container (8) is placed in the receiving seat (1), the plurality of sensors (16, 16') being all arranged to measure the temperature at the outer wall surface (8e) of the container when the container is placed in the machine.

16. The system according to claim 15 wherein the plurality of temperature sensors (16, 16') are arranged at opposite portions of the receiving seat (1) .

## Patentansprüche

1. System, umfassend eine Vorrichtung (20) und einen Behälter (8), wobei die Vorrichtung (20) eine Aufnahme (1) zum Aufnehmen eines Behälters (8), ein Wärmeaustauschelement (1a) mit einer Wärmeaustausch-Kontaktoberfläche (21), die so angeordnet ist, dass sie in Kontakt mit einer Außenwandfläche (8d) des Behälters ist, wenn der Behälter in der Aufnahme (1) sitzt, und mindestens einen Temperatursensor (16), der so angeordnet ist, dass er die Temperatur an der Außenwandfläche (8e) des Behälters misst, wenn der Behälter in der Vorrichtung angeordnet ist, umfasst, wobei der Temperatursensor (16) beabstandet von dem Wärmeaustauschelement (1a) und somit von der Wärmeaustausch-Kontaktoberfläche (21) der Vorrichtung angeordnet ist,
wobei die Vorrichtung (20) zum Herstellen gekühlter Süßwaren mittels des Behälters (8) ausgelegt ist, wobei der Behälter (8) einen Wärmeaustausch-Wandabschnitt (12) umfasst, der sich mit dem Wärmeaustauschelement (1a) überlappt, wenn der Behälter (8) an Ort und Stelle in der Aufnahme (1) der Maschine ist, wobei das Wärmeaustauschelement (1a) als Reaktion auf die Temperatur an der Außenwandfläche (8e) des Behälters, die mittels des mindestens einen Temperatursensors (16) gemessen wird, betrieben wird,
wobei der Behälter (8) einen zusätzlichen wärmeleitenden Abschnitt (17) umfasst, der angeordnet ist, wo der Temperatursensor (16) in Kontakt mit der Außenwandfläche (8d) des Behälters ist, wenn der Behälter (8) in der Aufnahme (1) angeordnet ist.

2. System nach Anspruch 1, wobei der zusätzliche wärmeleitfähige Abschnitt (17) axial von dem Wärmeaustausch-Wandabschnitt (12) des Behälters beabstandet angeordnet ist, wenn der Behälter (8) in der Aufnahme (1) angeordnet ist.

3. System nach Anspruch 1, wobei der zusätzliche wärmeleitfähige Abschnitt (17) und der Wärmeaustausch-Wandabschnitt (12) in einem einzigen ringförmigen Abschnitt ausgebildet ist, der sich mit dem Wärmeaustauschelement (1a) und dem Temperatursensor (16) überlappt, wenn der Behälter (8) in der Aufnahme (1) angeordnet ist.

4. System nach einem der vorstehenden Ansprüche, wobei der zusätzliche wärmeleitfähige Abschnitt (17) eine Dicke umfasst, die sich von der Dicke der übrigen Behälterwand unterscheidet, bevorzugt eine reduzierte Dicke von 10 bis 30 %, bevorzugter eine reduzierte Dicke von 15 bis 25 % der Dicke der Behälterwand.

5. System nach einem der vorstehenden Ansprüche, wobei der zusätzliche wärmeleitfähige Abschnitt (17) aus einem anderen Material als der Rest des Behälters (8) und/oder der Wärmeaustausch-Wandabschnitt (12) hergestellt ist.

6. System nach einem der vorstehenden Ansprüche, wobei der Temperatursensor (16) so angeordnet ist, dass er in direktem Kontakt mit der Außenoberfläche (8e) des Behälters ist, wenn der Behälter in der Vorrichtung angeordnet ist.

7. System nach einem der vorstehenden Ansprüche, wobei der Temperatursensor (16) so angeordnet ist, dass er einen Druck auf die Außenwandfläche (8d) des Behälters ausübt, wenn der Behälter an Ort und Stelle in der Aufnahme (1) der Vorrichtung ist.

8. System nach einem der vorstehenden Ansprüche, wobei der Temperatursensor (16) ein Kraftanlegeelement (16a) umfasst, das zum Ausüben einer Kraft geeignet ist, die radial nach innen zum Innenraum der Aufnahme (1) gerichtet ist.

9. System nach einem der vorstehenden Ansprüche, wobei der Temperatursensor (16) gegen die Außenwandfläche (8d) des Behälters (8) federgespannt ist, wenn der Behälter in der Aufnahme (1) angeordnet ist.

10. System nach einem der vorstehenden Ansprüche, wobei der Temperatursensor (16) so angeordnet ist, dass er von einer Innenoberfläche der Aufnahme (1) in der Richtung des Raums, der dem Behälter (8) zugewiesen ist, hervorragt.

11. System nach Anspruch 10, wobei der Temperatursensor (16) um 1 bis 3 mm von der Innenoberfläche der Aufnahme (1) hervorragt.

12. System nach einem der vorstehenden Ansprüche, wobei der Temperatursensor (16) in einem Abstand von mindestens zwischen 2 bis 40 mm, bevorzugt von mindestens zwischen 5 und 30 mm von der Wärmeaustausch-Kontaktoberfläche (21) angeordnet ist.

13. System nach einem der vorstehenden Ansprüche, wobei der Temperatursensor (16) an einem wärmeisolierenden Abschnitt (1b) der Aufnahme (1) angeordnet ist.

14. System nach Anspruch 13, wobei der wärmeisolierende Abschnitt (1b) aus einem Material mit einer Wärmeleitfähigkeit von gleich oder weniger als 2 W/mK, bevorzugt gleich oder weniger als 1 W/mK, bevorzugt aus einem Polymermaterial hergestellt ist.

15. System nach einem der vorstehenden Ansprüche, wobei die Vorrichtung (20) mehrere Temperatursensoren (16, 16') umfasst, die an unterschiedlichen Stellen im Bezug auf die Außenwand des Behälters (8) angeordnet sind, wenn der Behälter (8) in der Aufnahme (1) angeordnet ist, wobei die mehreren Sensoren (16, 16') jeweils so angeordnet sind, dass sie die Temperatur an der Außenwandfläche (8e) des Behälters messen, wenn der Behälter in der Vorrichtung angeordnet ist.

16. System nach Anspruch 15, wobei die mehreren Temperatursensoren (16, 16') an gegenüberliegenden Abschnitten der Aufnahme (1) angeordnet sind.

## Revendications

1. Système comprenant une machine (20) et un récipient (8), la machine (20) comprenant un siège récepteur (1) pour recevoir un récipient (8), un élément d'échange thermique (1a) ayant une surface de contact d'échange thermique (21) disposée pour être en contact avec une surface de paroi externe (8d) du récipient lorsque le récipient est placé dans le siège récepteur (1) et au moins un capteur de température (16) disposé pour mesurer la température au niveau de la surface de paroi externe (8e) du récipient lorsque le récipient est placé dans la machine, le capteur de température (16) étant disposé à une distance de l'élément d'échange thermique (1a) et ainsi à une distance de la surface de contact d'échange thermique (21) de la machine,
la machine (20) étant conçue pour préparer des confiseries refroidies au moyen du récipient (8), le récipient (8) comprenant une partie de paroi d'échange thermique (12) se chevauchant avec l'élément d'échange thermique (1a) lorsque le récipient (8) est en place dans le siège récepteur (1) de la machine, l'élément d'échange thermique (1a) fonctionnant en réponse à la température au niveau de la surface de paroi externe (8e) du récipient mesurée au moyen du au moins un capteur de température (16),
dans lequel le récipient (8) comprend une partie thermoconductrice additionnelle (17) positionnée à l'endroit où le capteur de température (16) est en contact avec la surface de paroi externe (8d) du récipient lorsque le récipient (8) est placé dans le siège récepteur (1).

2. Système selon la revendication 1, dans lequel la partie thermoconductrice additionnelle (17) est disposée axialement à une distance de la partie de paroi d'échange thermique (12) du récipient lorsque le récipient (8) est placé dans le siège récepteur (1).

3. Système selon la revendication 1, dans lequel la partie thermoconductrice additionnelle (17) et la partie de paroi d'échange thermique (12) sont formées en une partie annulaire unique se chevauchant avec l'élément d'échange thermique (1a) et le capteur de température (16) lorsque le récipient (8) est placé dans le siège récepteur (1).

4. Système selon l'une quelconque des revendications précédentes, dans lequel la partie thermoconductrice additionnelle (17) comprend une épaisseur qui est différente du reste de l'épaisseur de paroi du récipient, de préférence une épaisseur réduite de 10 à 30 %, plus préférablement une épaisseur réduite de 15 à 25 %, par rapport à celle de l'épaisseur de la paroi du récipient.

5. Système selon l'une quelconque des revendications précédentes, dans lequel la partie thermoconductrice additionnelle (17) est fabriquée en un matériau différent en comparaison à celui du reste du récipient (8) et/ou à celui de la partie de paroi d'échange thermique (12).

6. Système selon l'une quelconque des revendications précédentes, dans lequel le capteur de température (16) est disposé pour être en contact direct avec la surface externe (8e) du récipient lorsque le récipient est placé dans la machine.

7. Système selon l'une quelconque des revendications précédentes, dans lequel le capteur de température (16) est disposé pour exercer une pression sur la surface de paroi externe (8d) du récipient lorsque le récipient est en place dans le siège récepteur (1) de la machine.

8. Système selon l'une quelconque des revendications précédentes, dans lequel le capteur de température (16) comprend un élément d'application de force (16a) approprié pour exercer une force orientée radialement vers l'intérieur vers l'intérieur du siège récepteur (1).

9. Système selon l'une quelconque des revendications précédentes, dans lequel le capteur de température (16) est sollicité par un ressort contre la surface de paroi externe (8d) du récipient (8) lorsque le récipient est placé dans le siège récepteur (1).

10. Système selon l'une quelconque des revendications précédentes, dans lequel le capteur de température (16) est disposé pour faire saillie à partir d'une surface interne du siège récepteur (1) en direction de l'espace attribué pour le récipient (8).

11. Système selon la revendication 10, dans lequel le capteur de température (16) fait saillie de 1 à 3 mm de la surface interne du siège récepteur (1).

12. Système selon l'une quelconque des revendications précédentes, dans lequel le capteur de température (16) est disposé à une distance d'au moins entre 2 et 40 mm, de préférence d'au moins entre 5 et 30 mm, de la surface de contact d'échange thermique (21).

13. Système selon l'une quelconque des revendications précédentes, dans lequel le capteur de température (16) est disposé au niveau d'une partie d'isolation thermique (1b) du siège récepteur (1).

14. Système selon la revendication 13, dans lequel la partie d'isolation thermique (1b) est fabriquée d'un matériau ayant une conductivité thermique égale ou inférieure à 2 W/mK, de préférence égale ou inférieure à 1 W/mK, de préférence fabriquée en un matériau polymère.

15. Système selon l'une quelconque des revendications précédentes, dans lequel la machine (20) comprend une pluralité de capteurs de température (16, 16') disposés au niveau de différents emplacements par rapport à la paroi externe du récipient (8) lorsque le récipient (8) est placé dans le siège récepteur (1), la pluralité de capteurs (16, 16') étant disposés pour mesurer la température au niveau de la surface de paroi externe (8e) du récipient lorsque le récipient est placé dans la machine.

16. Système selon la revendication 15, dans lequel la pluralité de capteurs de température (16, 16') sont disposés au niveau de parties opposées du siège récepteur (1).
